# EUROPEAN PATENT APPLICATION

(11) **EP 4 753 055 A1**
(43) Date of publication of application: **03.06.2026**
(21) Application number: 25794791.1
(22) Date of filing: 21.04.2025
(51) Int. Cl.: H01M 50/383, H01M 50/342, H01M 50/244, H01M 50/503, H01M 50/249

(54) **BATTERY CELL ASSEMBLY, BATTERY PACK, AND TRANSPORTATION MEANS INCLUDING SAME**

(30) Priority: 23.04.2024 KR 20240054380
(71) Applicant: LG Energy Solution, Ltd., Seoul 07335 (KR)
(72) Inventor: CHOI, Sung Ho, Daejeon 34122 (KR); YOO, Dong Won, Daejeon 34122 (KR)
(74) Representative: Plasseraud IP
(86) International application number: PCT/KR2025/095241
(87) International publication number: WO 2025/226103

(57) **Abstract**

[Summary]

A battery cell assembly of the present invention comprises: a plurality of battery cells, each of which is provided with a positive terminal and a negative terminal; and a plurality of holder assemblies arranged for the battery cells to be detachable, and each including a positive bus-bar arranged to be electrically connected to the positive terminal, a negative bus-bar arranged to be connected to the negative terminal, and a coupling mold arranged to be coupled to each of the positive bus-bar and the negative bus-bar, when connected to the battery cell, wherein a mold vent hole arranged for gas to be discharged is formed in the coupling mold.

## Description

### [Technical Field]

The present invention relates to a battery cell assembly, a battery pack, and a transportation device comprising the same, and more specifically, relates to a battery cell assembly, a battery pack, and a transportation device comprising the same, which enable replacement of a single battery cell in a battery assembly composed of multiple cylindrical battery cells, and can prevent ignition of battery cells by smoothly performing gas emission.

This application claims the benefit of priority based on Korean Patent Application No. 10-2024-0054380 dated April 23, 2024, the disclosure of which is incorporated herein by reference in its entirety.

### [Background Art]

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries. It is expected that secondary batteries will be applied to more fields and products in the future.

Generally, the secondary battery can be provided with a plurality of battery cells, where depending on the shape of the battery case. Such a battery cell is classified into cylindrical battery and rectangular battery cells in which an electrode assembly is embedded into a cylindrical or rectangular metal can, and pouch-type battery cells in which an electrode assembly is embedded into a pouch-type case of an aluminum laminate sheet. The electrode assembly embedded into the battery case is a power generation element consisting of a structure of a positive electrode, a negative electrode, and a separator interposed between these positive and negative electrodes to be capable of charging and discharging, which is classified into a jelly-roll type wound by interposing a separator between long sheet-shaped positive and negative electrodes coated with active materials, and, and a stack type in which multiple positive and negative electrodes with a certain size are sequentially laminated in a state where a separator is interposed therebetween.

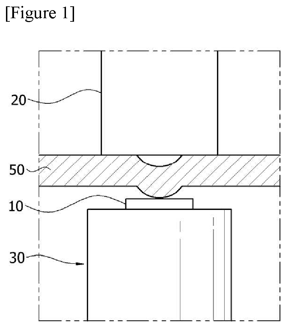

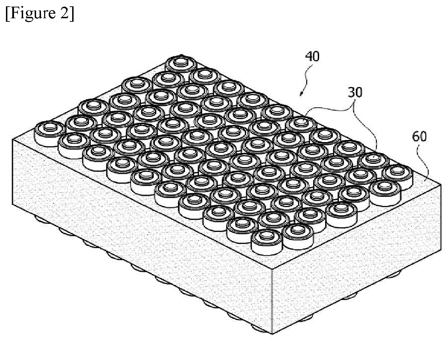

Figure 1 is a cross-sectional diagram schematically showing a welding process of a general battery cell (30) and a bus-bar (50). Then, Figure 2 is a perspective diagram schematically showing a battery cell assembly (40) including battery cells (30) fixed using an adhesive (60) of a conventional art.

Referring to Figures 1 and 2, in the advanced technology field, a battery pack (not shown) comprising a battery cell assembly (or battery cell laminate) consisting of multiple battery cells (30), and a battery management system is used to supply a power source to various electronic devices. As in Figure 1, generally, the battery cell assembly (40) is electrically connected by a method, such as resistance welding, using a resistance welding rod (20) between an electrode terminal (10) of each of multiple battery cells (30) mounted therein and a bus-bar (50) in the form of a metal plate.

In addition, as in Figure 2, the battery cells (30) of the conventional battery cell assembly have been sometimes fixed using an adhesive (60) (potting resin) or the like inside an exterior case (not shown) of the battery cell assembly (40) to prevent damage to the electrical connection by outer shocks.

However, in the battery cell assembly (40) of such a conventional art, when problems such as overdischarge, damage, or short circuit occurred in some battery cells (30) among multiple battery cells (30) during use, it was difficult to replace only some battery cells (30) in which the problems occurred individually. That is, multiple battery cells (30) were bonded to the bus-bar (50), and the like, whereby upon separating them from the bus-bar (50), the damage to the bus-bar (50) occurred, so that it was easy for the electrical connection of the normal battery cells (30) to be disconnected. Also, to separate the battery cell (30) fixed in the external case with the adhesive (60), the adhesive (60) must be removed, but an operation of removing the adhesive (60) was expensive and time-consuming, thereby making it inefficient.

Therefore, it was inevitable to replace the battery cell assembly (40) of the conventional art with a minimum unit such as a module assembly consisting of several battery cells (30) without fixing with any adhesive (60), or to replace it with a new battery cell assembly (40). In such a replacement method, normal battery cells must be discarded together with defective battery cells and it is difficult to recycle the discarded battery cells, so that there are problems of increasing maintenance costs of the battery cell assembly (40) and causing environmental pollution.

Meanwhile, when an abnormal situation such as overcharge, overdischarge, or external impact occurs in the battery cell (30), the internal temperature and pressure rapidly increase. In this instance, a large amount of gas is generated inside the battery cell, wherein if this gas is not quickly discharged to the outside, the battery cell expands or, in severe cases, ruptures. Upon the rupture, it can lead to ignition and explosion, whereby it is very vulnerable to safety.

Conventionally, to prevent this, on the upper portion of the battery cell, a cap assembly including a vent device, which was arranged to open when the internal pressure of the battery cell increased above a certain level, was provided. The generated gas was discharged to the outside through this vent device upon abnormal behavior of the battery cell. However, since components such as bus-bars connected to electrode terminals were located around the cap assembly, it was difficult to smoothly discharge the gas through the vent device. That is, while the bus-bar blocked the vent device or obstructed the movement of the exhaust gas, the gas emission efficiency decreased, and the risk of battery cell rupture due to delayed gas emission and fire due to gas increased.

Therefore, there is a need for development of a new type of battery assembly technology capable of smoothly performing gas emission from battery cells in a housing to the outside while facilitating replacement of individual battery cells.

### [Disclosure]

### [Technical Problem]

The present invention is intended to solve problems occurring in conventional battery assemblies.

Specifically, through one example of the present invention, it is intended to provide a battery cell assembly, a battery pack, and a transportation device comprising the same, in which battery cells are easily removed and replaced individually when necessary.

Also, it is intended to provide a battery cell assembly, a battery pack, and a transportation device comprising the same, having a structure in which gas generated inside the battery cells can be efficiently discharged to the outside without being obstructed by bus-bars, and the like.

In addition, it is intended to provide a battery cell assembly, a battery pack, and a transportation device comprising the same, which can prevent the risk of expansion, rupture, and ignition of the battery cells.

### [Technical Solution]

In order to achieve the above-described objects, according to one example of the present invention, it provides a battery cell assembly comprising: a plurality of battery cells, each of which is provided with a positive terminal and a negative terminal; and a plurality of holder assemblies arranged for the battery cells to be detachable, and each including a positive bus-bar arranged to be electrically connected to the positive terminal, a negative bus-bar arranged to be connected to the negative terminal, and a coupling mold arranged to be coupled to each of the positive bus-bar and the negative bus-bar, when connected to the battery cell, wherein a mold vent hole arranged for gas to be discharged is formed in the coupling mold.

The coupling mold may comprise a mold plate portion on which the mold vent hole is formed, and a mold protrusion portion protruding outwardly from the mold plate portion and having an exposure hole formed, wherein a portion of the positive bus-bar is exposed.

The coupling mold may have the positive bus-bar embedded therein so that a portion of the positive bus-bar is exposed to the outside.

The positive bus-bar may further comprise a positive plate portion located at a lower portion of the coupling mold, and a positive protrusion portion exposed to the outside through the exposure hole of the coupling mold and extending from the positive plate portion.

In addition, the battery cell may comprise a cap assembly provided at the upper portion and arranged so that when a gas pressure of equal to or more than a predetermined pressure inside the battery cell occurs, at least a portion thereof is opened to discharge internal gas to the outside, wherein the cap assembly may be positioned to face the mold vent hole.

In the negative bus-bar, an insertion hole arranged so that the coupling mold is inserted and coupled thereto may be formed.

The coupling mold may have a slit, into which the inner circumference portion of the insertion hole is inserted, provided in the mold plate portion.

The negative bus-bar may have a plurality of fixing protrusions provided in the inner circumference portion of the insertion hole, and on the mold plate portion of the coupling mold, a plurality of fixing holes arranged so that each of the plurality of fixing protrusions is inserted therein may be formed.

An upper cover, to which the plurality of holder assemblies is coupled, arranged to cover the plurality of battery cells may be further included, and a cover vent hole arranged to be in communication with the mold vent hole may be formed on the upper cover.

The positive bus-bar may comprise a positive connection unit elastically pressurizing the positive terminal, and the positive connection unit may comprise a pressurization moving part having electrical conductivity by contacting the positive terminal, and an elastic member elastically supporting the pressurization moving part in the positive terminal direction.

The negative bus-bar may comprise a negative plate portion, and a negative connection portion extending downward from the negative plate portion to be in contact with the negative terminal.

To achieve the above-described objects, according to one example of the present invention, it provides a battery pack comprising at least one battery cell assembly above and further comprising a battery management system (BMS).

In addition, to achieve the above-described objects, according to one example of the present invention, it provides a transportation device comprising the battery pack.

### [Effects of Invention]

To improve problems in the conventional art, the battery cell assembly and the battery pack of the present invention, and the transportation device comprising the same have the following effects.

As the battery cell is detachably coupled to the holder assembly, in the case where the replacement of the battery cell is required, only the relevant battery cell can be selectively separated and replaced with a new battery cell. Accordingly, it is possible to increase recyclability of the battery cells, and it is possible to significantly reduce maintenance costs.

In addition, by configuring the gas generated due to the abnormal behavior of the battery cell to enable to be discharged through the coupling mold of the holder assembly, the gas generated due to the excessive pressure inside the battery cell can be quickly and effectively discharged to the outside through the mold vent hole. Accordingly, there is an effect capable of minimizing the risk of expansion, rupture, ignition, and the like of the battery cell due to the gas emission delay.

### [Brief Description of Drawings]

Figure 1 is a cross-sectional diagram schematically showing a welding process of a general battery cell and a bus-bar.
Figure 2 is a perspective diagram schematically showing a battery cell assembly including battery cells fixed using an adhesive of a conventional art.
Figure 3 is a perspective diagram schematically showing an appearance of a battery cell assembly according to one example of the present invention.
Figure 4 is an exploded perspective diagram schematically showing an appearance of a battery cell assembly according to one example of the present invention.
Figure 5 is a perspective diagram schematically showing an appearance in which a battery cell and a holder assembly of a battery cell assembly according to one example of the present invention are coupled.
Figure 6 is an exploded perspective diagram schematically showing a separated appearance of components of a holder assembly of a battery cell assembly according to one example of the present invention.
Figure 7 is a partial cross-sectional diagram schematically showing an internal appearance of a battery cell assembly according to one example of the present invention.
Figure 8 is a partial perspective diagram schematically showing an appearance of the remaining components excluding a connection member among components of a battery cell assembly according to one example of the present invention.
Figure 9 is a schematic diagram schematically showing an appearance of a battery pack according to one example of the present invention.
Figure 10 is a schematic diagram schematically showing an appearance of a transportation device according to one example of the present invention.

### [Mode for Invention]

Hereinafter, a battery assembly, a battery pack, and a transportation device comprising the same, according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

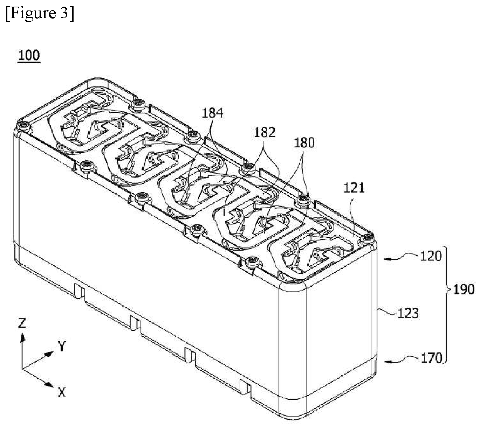

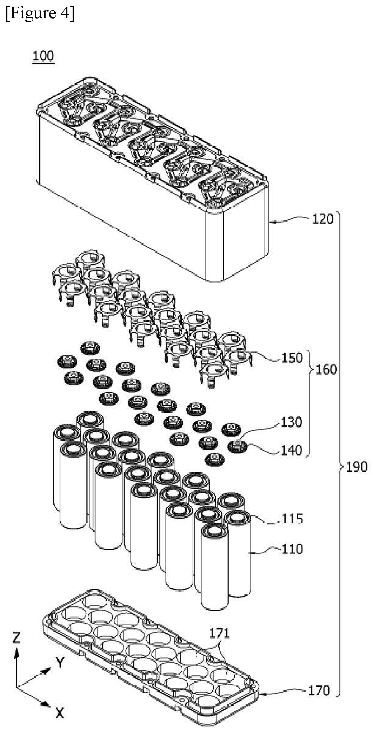

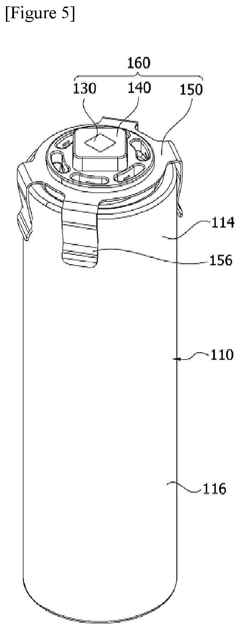

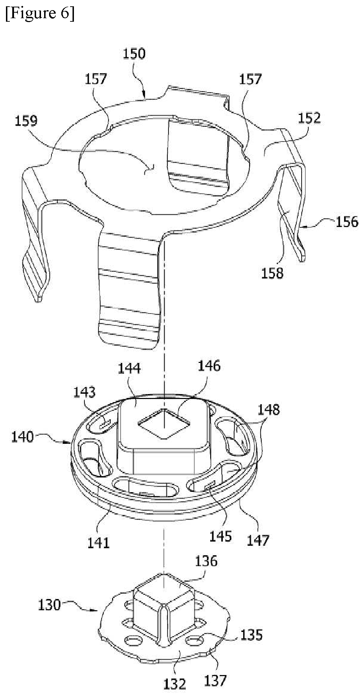

Figure 3 is a perspective diagram schematically showing an appearance of a battery cell assembly (100) according to one example of the present invention. Figure 4 is an exploded perspective diagram schematically showing a battery cell assembly (100) according to one example of the present invention. Figure 5 is a perspective diagram schematically showing an appearance in which a battery cell (110) and a holder assembly (160) of a battery cell assembly (100) according to one example of the present invention are coupled. Then, Figure 6 is an exploded perspective diagram schematically showing a separated appearance of a holder assembly (160) of a battery cell assembly (100) according to one example of the present invention.

Referring to Figures 3 to 6, the battery cell assembly (100) according to one example of the present invention comprises a plurality of battery cells (110). For example, the battery cell (110) may be a cylindrical battery cell (110). However, the outer shape of the battery cell (110) is not necessarily limited to a cylindrical shape, which may be a rectangular battery cell with a cuboidal outer shape.

Also, each of the plurality of battery cells (110) may be provided with a positive terminal (112) and a negative terminal (114). For example, as in Figure 5, each battery cell (110) may comprise an electrode assembly, a battery can (116) accommodating the electrode assembly therein, and a cap assembly (115) coupled to the upper portion of the battery can (116). At this time, the positive terminal (112) may be located at the upper portion of the cap assembly (115). In addition, the negative terminal (114) may be configured as at least a portion of the battery can (116). Then, the battery cell (110) may be filled therein with an electrolyte.

As an example, the cap assembly (115) may comprise an insulating gasket (not shown), a venting device (not shown), a PTC element (not shown), and a terminal plate (not shown) connecting the positive terminal (112) and the positive electrode, and the like. However, the cap assembly is not necessarily limited to these components, and any general cap assembly equipped in the battery cell (110) is applicable.

Also, the battery cell assembly (100) according to one example of the present invention comprises a plurality of holder assemblies (160). The plurality of holder assemblies (160) is arranged so that each of the plurality of battery cells (110) is detachable. As one example, one holder assembly may be detachably mounted on one battery cell (110). For example, the holder assembly (160) may be arranged to be temporarily fixed by pressurizing it downward from the upper portion of the battery cell (110), or to be detachable by pulling it upward. Meanwhile, various means such as a fit-coupling may be utilized as a method of temporarily fixing the holder assembly (160) to the battery cell (110).

In addition, each of the plurality of holder assemblies (160) comprises a positive bus-bar (130) arranged to be electrically connected to the positive terminal (112) of the battery cell (110). The positive bus-bar (130) is arranged to be electrically connected by contacting the positive terminal (112). Each of the plurality of holder assemblies (160) comprises a negative bus-bar (150) arranged to be electrically connected to the negative terminal (114) of the battery cell (110). The negative bus-bar (150) is arranged to be connected to the negative terminal (114) upon coupling with the battery cell (110).

Furthermore, each of the plurality of holder assemblies (160) comprises a coupling mold (140). Each of these coupling molds (140) may be arranged to be coupled with each of the positive bus-bar (130) and the negative bus-bar (150). That is, the coupling mold (140) is coupled with each of the positive bus-bar (130) and the negative bus-bar (150), whereby the positive bus-bar (130) and the negative bus-bar (150) may take appropriate positions facilitating contact with the electrode terminals of the battery cell (110) while forming electrical insulation of the two bus-bars.

Also, in the battery cell assembly (100) according to one example of the present invention, at least one mold vent hole (148) arranged for gas to be discharged may be formed in the coupling mold (140). Such a mold vent hole (148) effectively discharges gas generated inside the battery cell (110) to the outside, whereby it is possible to prevent rupture or ignition of the battery cell (110).

In addition, the battery cell assembly (100) of the present invention facilitates individual replacement of the battery cells (110) through the detachable structure of the pluralities of battery cells (110) and holder assemblies (160), and induces smooth discharge of internal gas through the vent hole, whereby it is possible to enhance the safety of the battery cells (110).

Referring to Figures 5 and 6, in the battery cell assembly (100) according to one example of the present invention, when the plurality of holder assemblies (160) and the plurality of battery cells (110) are coupled, the positive terminal (112) and the positive bus-bar (130) may be configured to contact each other, and the negative terminal (114) and the negative bus-bar (150) may be configured to contact each other.

Specifically, when each holder assembly (160) is positioned on the upper portion of the battery cell (110), the positive bus-bar (130) and the negative bus-bar (150) may be disposed to face the positive terminal (112) and the negative terminal (114) of the battery cell (110), respectively. In this state, when the holder assembly (160) is connected to the upper portion of the battery cell (110) by pressurizing the holder assembly (160) toward the battery cell (110), the positive bus-bar (130) may contact the positive terminal (112), and the negative bus-bar (150) may contact the negative terminal (114).

Therefore, the battery cell assembly (100) of the present invention can more stably and efficiently implement an electrical connection between the battery cell (110) and the holder assembly (160) by allowing the positive bus-bar (130) and the negative bus-bar (150) to be in contact with the terminals of the battery cell (110) upon coupling of the holder assembly (160) and the battery cell (110).

In addition, the battery cell assembly (100) according to one example of the present invention may be arranged so that when the holder assembly (160) is separated from the battery cell (110), the positive terminal (112) and the negative terminal (114) are sequentially separated from the positive bus-bar (130) and the negative bus-bar (150).

Meanwhile, when the replacement of the battery cell (110) is required due to problems occurring in the battery cell (110), the holder assembly (160) is separated from the battery cell (110). At this time, if the holder assembly (160) is lifted from the upper portion of the battery cell (110), the positive bus-bar (130) and the negative bus-bar (150) may be released from the contact state with the positive terminal (112) and the negative terminal (114) of the battery cell (110).

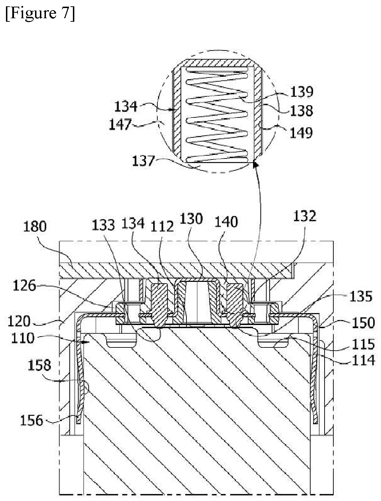

Figure 7 is a partial cross-sectional diagram schematically showing an internal appearance of a battery cell assembly according to one example of the present invention.

Referring to Figures 5 to 7, in the battery cell assembly (100) according to one example of the present invention, a cap assembly (115) may be provided on the upper portion of the battery cell (110). Then, the holder assembly (160) may be detachably coupled to the cap assembly (115). Specifically, the cap assembly (115) may perform a role of sealing and protecting the battery can (116) and the electrode assembly.

In addition, the cap assembly (115) of the battery cell assembly (100) according to one example of the present invention may be arranged so that when gas pressure of equal to or more than a predetermined pressure inside the battery cell (110) occurs, at least a portion thereof is opened to discharge the internal gas to the outside.

In general, when the battery cell (110) is subjected to abnormal conditions such as overcharge, overdischarge, and high-temperature exposure, a large amount of gas is generated inside the battery cell (110). If the internal pressure of the battery cell (110) excessively increases due to the generated gas, it may lead to expansion or rupture of the battery cell (110), whereby it poses a significant risk to safety. Therefore, in such a situation, it is very important to quickly discharge the gas inside the battery cell (110) to the outside, thereby lowering the internal pressure.

To this end, in the present invention, the cap assembly (115) is arranged with a structure which is opened when the internal pressure increases, so that gas inside the battery cell (110) can be discharged to the outside. Specifically, if an internal pressure of equal to or more than a certain pressure acts thereon, a specific portion is broken or ruptured to be opened, whereby the cap assembly (115) may provide a passage for gas emission. This open structure of the cap assembly (115) may be implemented in various forms. For example, a portion of the cap assembly (115) may be arranged with a rupture structure and an open structure that are broken or opened by the internal pressure.

In addition, the cap assembly (115) may be positioned to face the mold vent hole (148).

Therefore, the battery cell assembly (100) comprises a cap assembly (115) having a rupture structure or an open structure that is opened at a certain internal pressure or more, so that internal gas can be quickly discharged to the outside when an abnormal situation occurs in the battery cell (110), and accordingly, it is possible to ensure safety.

Also, the coupling mold (140) may comprise a mold plate portion (147). The mold plate portion (147) may be arranged to cover the upper portion of the positive plate portion (132). That is, the mold plate portion (147) may be coupled to the upper portion of the positive plate portion (132). The mold plate portion (147) may have electrical insulation. As one example, the mold plate portion (147) may be formed of a material having insulation, and may be formed of a resin material. The mold plate portion (147) may be circular in a planar shape.

In addition, the coupling mold (140) may comprise a mold protrusion portion (144). Such a mold protrusion portion (144) may have a shape protruding upward from the mold plate portion (147). The mold protrusion portion (144) may have an exposure hole (146) formed therein. The exposure hole (146) may be arranged at the center of the mold protrusion portion (144) so that the upper portion of the positive protrusion portion (136) of the coupled positive bus-bar (130) is exposed to the outside. Since the upper surface of the positive bus-bar (130) is opened through such an exposure hole (146), the electrical connection between the positive bus-bar (130) and the connection member (180) becomes easy. Therefore, through the structure of the coupling mold (140), the electrical connection with the connection member (180) may be made smooth while promoting effective insulation and fixing of the positive bus-bar (130) and the negative bus-bar (150).

Referring to Figures 5 and 6, the coupling mold (140) of the battery cell assembly (100) according to one example of the present invention may have the positive bus-bar (130) built in. As one example, the positive bus-bar (130) may be disposed in a state of being built in the coupling mold (140). At this time, the coupling mold (140) may be arranged so that a portion of the positive bus-bar (130) is exposed to the outside. This facilitates electrical connection between the positive bus-bar (130) and other electrical components (connection members).

Also, the positive bus-bar (130) may comprise a positive plate portion (132). The positive plate portion (132) may be positioned at the lower portion of the coupling mold (140) to be exposable in a downward direction (in a direction toward the battery cell (110)). The positive plate portion (132) may have a circular outer peripheral portion and a flat plate shape.

In addition, the positive bus-bar (130) may comprise a positive protrusion portion (136). The positive protrusion portion (136) may have a shape protruding and extending from the positive plate portion (132). The positive protrusion portion (136) is joined to a connection member (180) (external bus-bar) to be described below, which may be electrically connected to the connection member (180).

Furthermore, the positive protrusion portion (136) of the positive bus-bar (130) may be built into the mold protrusion portion (144). Referring to Figure 7, the mold plate portion (147) may be provided with an insertion groove (149). The insertion groove (149) may be arranged to accommodate a body portion (138) of a positive connection unit (134).

Also, an insertion hole (159) may be formed in the positive bus-bar (150) of the battery cell assembly (100) according to one example of the present invention. For example, the insertion hole (159) may have an approximately circular shape. The insertion hole (159) may have a size that the coupling mold (140) to be described below is insertable thereto.

In addition, the insertion hole (159) may be formed in an appropriate size and an appropriate shape considering a capacity of the battery cell (110) or a generated gas volume, and the like. For example, the insertion hole (159) may have a shape such as a circle, an ellipsoid, or a rectangle.

Therefore, by forming the insertion hole (159) in the negative bus-bar (150), it is possible to induce faster and more efficient gas emission when the internal pressure of the battery cell (110) increases. Through this, it is possible to further enhance the safety of the battery pack.

In addition, the mold vent hole (148) formed in the coupling mold (140) may be communicated with the insertion hole (159). For example, the insertion hole (159) may be circular. That is, the gas generated inside the battery cell (110) may pass through the mold vent hole (148) formed in the coupling mold (140) inserted into the insertion hole (159), and then may be discharged to the outside.

Referring to Figures 5 and 6, the coupling mold (140) may be coupled to the insertion hole (159). At this time, the mold plate portion (147) may be provided with a slit (S) into which the inner circumference portion of the insertion hole (159) is inserted. For example, a linear slit (S) embedded to a predetermined depth may be formed in a circular shape along the side surface of the mold plate portion (147).

Accordingly, the coupling mold (140) may stably couple the negative bus-bar (150) and the insertion hole (159) by inserting the inner circumference portion of the insertion hole (159) into the slit (S) provided in the mold plate portion (147).

In addition, the negative bus-bar (150) may be provided with a plurality of fixing protrusions (157) arranged in the inner circumference portion of the insertion hole (159) so that each is inserted into the slit (S) formed in the mold plate portion (147). Then, the coupling mold (140) may comprise a plurality of fixing holes (143) arranged in the mold plate portion (147) so that each of the plurality of fixing protrusions (157) is inserted thereto. For example, the internal space of the fixing hole (143) may be in a shape corresponding to the fixing protrusion (157).

Therefore, a plurality of fixing protrusions (157) is provided in the inner circumference portion of the insertion hole (159), and a plurality of fixing holes (143) arranged so that each of the plurality of fixing protrusions (157) is inserted is formed in the mold plate portion (147), whereby the negative bus-bar (150) and the coupling mold (140) may be precisely and stably fixed on the set coupling position. Accordingly, the holder assembly (160) can make a reliable connection (contact) with the electrode terminals (112, 114) of the battery cell (110).

Also, the coupling among the positive bus-bar (130), the negative bus-bar (150), and the coupling mold (140) may be made in various ways. For example, they may be coupled by embedding the positive bus-bar (130) in the coupling mold (140) using a method such as insert injection, and then inserting the coupling mold (140) coupled with the positive bus-bar (130) into the insertion hole (159) of the negative bus-bar (150). At this time, the coupling mold (140) may function as an insulator that electrically insulates the positive bus-bar (130) and the negative bus-bar (150).

In addition, the positive bus-bar (130) may be provided with a plurality of coupling protrusions (137) to be stably fixed in a state where it is embedded inside the coupling mold (140). The coupling mold (140) may be formed with coupling holes (145) arranged so that the coupling protrusions (137) of the positive bus-bar (130) are inserted thereto.

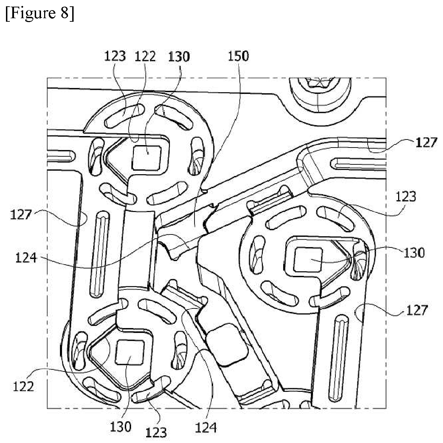

Figure 8 is a partial perspective diagram schematically showing an appearance of the remaining components excluding a connection member among components of a battery cell assembly (100) according to one example of the present invention.

Referring to Figures 3 to 8, the battery cell assembly (100) according to one example of the present invention may comprise an upper cover (120) arranged to cover a plurality of battery cells (110). The upper cover (120) may be arranged to accommodate a plurality of battery cells (110) therein. The upper cover (120) may be arranged to accommodate a plurality of holder assemblies (160) in a state where the plurality of battery cells (110) is accommodated therein. An accommodation portion (126) may be arranged, in which the holder assemblies (160) may be accommodated in the accommodation portion (126) inside the upper cover (120). As one example, the accommodation portion (126) may have a groove shape that the holder assemblies (160) may be inserted and seated thereon. For example, the accommodation portion (126) may have an inner space corresponding to the outer appearance of the holder assemblies (160).

In addition, the upper cover (120) may be formed with a cover vent hole (123) arranged to be in communication with at least one of the insertion hole (159) and the mold vent hole (148). That is, the upper cover (120) may protect the battery cell (110) and the holder assembly (160) from the external environment, and discharge gas generated from the battery cell (110) to the outside.

For example, the cover vent hole (123) may be formed to have a size like that of the mold vent hole (148) or a size larger than that of the mold vent hole (148). In such a structure, gas passing through the lower mold vent holes (148, 159) may smoothly escape through the cover vent hole (123) of the upper cover (120). If the size of the cover vent hole (123) is small, a bottleneck phenomenon may occur upon gas emission, which may rather cause gas stagnation as well. Therefore, by arranging the cover vent holes (123) in the upper cover (120), it is possible to perform the discharge of the gas generated from the battery cell (110) smoothly.

Referring to Figures 3 and 8, the battery cell assembly (100) may comprise a plurality of connection members (180). The connection members (180) may be mounted on the upper portion of the upper cover (120). Each of the plurality of connection members (180) may comprise at least one of the positive contact portion (182) and the negative contact portion (184).

Referring to Figures 3, 4, and 7, a positive opening (122) for contact between the positive bus-bar (130) and the connection member (180) may be formed in the upper cover (120). Specifically, the positive opening (122) may have an opened shape so that the positive bus-bar (130) is exposed to the outside.

Also, a negative opening (124) for contact between the negative bus-bar (150) and the connection member (180) may be formed in the upper cover (120). Specifically, the negative opening (124) may have an opened shape so that the negative bus-bar (150) is exposed to the outside.

In addition, the upper cover (120) may be formed with a connecting groove (127) arranged to insert a connection member (180) to be described below. For example, the connecting groove (127) may have a size corresponding to that of the connection member (180).

Furthermore, the positive contact portion (182) may be arranged to contact the positive plate portion (132) of the positive bus-bar (130) through the positive opening (122).

As one example, the negative contact portion (184) may be arranged to contact the negative plate portion (152) of the negative bus-bar (150) through the negative opening (124). The connection member (180) may have a form extending along the connecting groove (127) formed on the upper surface of the upper cover (120). That is, the connection member (180) may have a form bent according to the upper surface structure of the upper cover (120). For example, as in Figure 3, among the plurality of connection members (180), the connection members (180) electrically connected to the plurality of positive bus-bars (130) and the connection members (180) connected to the positive bus-bar (130) and the negative bus-bar (150) may be included.

Also, a housing (190) may comprise a lower cover (170). The lower cover (170) of the battery cell assembly (100) may be arranged to be coupled to the lower portion of the upper cover (120). For example, the upper cover (120) and the lower cover (170) may be screw-coupled using a fastening bolt. In addition, the lower cover (170) may be arranged to cover the lower portion of each of the plurality of battery cells (110).

Referring to Figures 5 to 7, the positive bus-bar (130) may comprise a positive connection unit (134). The positive connection unit (134) may have a shape protruding from the positive plate portion (132) toward the positive terminal (112). The positive connection unit (134) may be arranged to elastically pressurize the positive terminal (112). That is, the positive connection unit (134) may be arranged so that the protruding length varies depending on the distance between the positive bus-bar (130) and the positive terminal (112).

Also, a through-hole (135) arranged so that the positive connection unit (134) is inserted may be formed in the positive bus-bar (130) of the battery cell assembly (100) according to one example of the present invention. For example, the positive bus-bar (130) may be formed with four through-holes (135) arranged so that four positive connection units (134) are each inserted. A plurality of through-holes (135) with a circular shape may be formed in the positive bus-bar (130).

In addition, the positive connection unit (134) may comprise a body portion (138). The body portion (138) may have electrical conductivity. That is, the body portion (138) may comprise a material such as an electrically conductive metal. The body portion (138) may be arranged to be built into the coupling mold (140). That is, the body portion (138) of the positive connection unit (134) may be coupled inside the coupling mold (140) using an insert injection method.

Furthermore, the positive connection unit (134) may comprise a pressurization moving part (133). The pressurization moving part (133) may have electrical conductivity. That is, the pressurization moving part (133) may comprise an electrically conductive metal material. The pressurization moving part (133) may be provided at the lower portion of the body portion (138). That is, the pressurization moving part (133) may be arranged to be in direct contact with the positive terminal (112). To this end, the pressurization moving part (133) may be arranged to be movable in the direction of pressurizing the positive terminal (112). At this time, the pressurization moving part (133) is designed to be movable within a certain range toward the positive terminal (112), so that the contact pressure with the positive terminal (112) may be appropriately adjusted.

In addition, the positive connection unit (134) may comprise an elastic member (139). The elastic member (139) may be built into the body portion (138). The elastic member (139) may be arranged to elastically pressurize the pressurization moving part (133) toward the positive terminal (112). The elastic member (139) is installed inside the body portion (138) to elastically support the pressurization moving part (133), thereby stably maintaining pressurizing force on the positive terminal (112). Through such a positive connection unit (134), it is possible to more reliably achieve the electrical connection between the positive terminal (112) and the positive bus-bar (130). For example, the elastic member (139) may be a spring member.

By comprising the positive connection unit (134) with such a structure, the positive terminal (112) and the positive bus-bar (130) can be reliably electrically connected. In addition, the positive connection unit (134) elastically pressurizes the positive terminal (112), whereby it is possible to prevent deformation or damage of the positive connection unit (134) or the positive terminal (112). Accordingly, it is possible to effectively prevent connection defects due to deformation or damage of the positive connection unit (134) or the positive terminal (112) occurring during the connection process of the conventional art.

Referring to Figures 5 to 7, the negative bus-bar (150) may comprise a negative plate portion (152) having a ring shape. The negative bus-bar (150) may comprise a negative connection portion (156). The negative connection portion (156) may have a form bent downward from the negative plate portion (152). The negative connection portion (156) may have a shape extending from the negative plate portion (152) to be in direct contact with the negative terminal (114). For example, as in Figure 7, the negative bus-bar (150) may be provided with four negative connection portions (156). The four negative connection portions (156) may have a shape bent downward from the negative plate portion (152) to connect with the negative terminal (114) of the battery can (116) located at the bottom. Then, the negative connection portion (156) is formed to extend downward from the opposite side of the negative plate portion (152), thereby being in direct contact with the negative terminal (114) of the battery cell (110). At this time, the negative connection portion (156) may have a structure capable of imparting elastomeric force so that it may stably contact the negative terminal (114).

Also, the negative bus-bar (150) may be arranged to be coupled to the upper cover (120). For example, as a double-sided adhesive tape (not shown) or adhesive is added between the upper surface of the negative plate portion (152) and the inner surface of the upper cover (120), the negative plate portion (152) may be bonded to the upper cover (120). However, it is not necessarily limited to this bonding method, and for example, the negative plate portion (152) may be coupled to the upper cover (120) by a forced fit method or an insert injection method.

In addition, the negative bus-bar (150) may comprise a negative connection portion (156) arranged to be in contact with the negative terminal (114). The negative bus-bar (150) may have a structure in which the negative plate portion (152) is used as a basic body, and the negative connection portion (156) is integrally extended from the negative plate portion (152). Specifically, the negative connection portion (156) may have a shape extending downward from the negative plate portion (152). Furthermore, the negative connection portion (156) may be provided with a connection protrusion portion (158) protruding toward the negative terminal (114). The connection protrusion portion (158) may be arranged to have elasticity so that elastic pressurization is possible. The connection protrusion portion (158) may have a structure bent in a V-shape toward the battery can (116). Such a V-shaped connection protrusion portion (158) has an advantage capable of elastically pressurizing the negative terminal (114).

Therefore, the battery cell assembly (100) related to one example of the present invention can directly connect to the negative terminal (114) of the battery cell (110) coupled to the lower portion of the holder assembly (160) by comprising the negative connection portion (156). Such a negative bus-bar (150) can implement a compact holder assembly (160), thereby effectively increasing the energy density of the battery cell assembly (100).

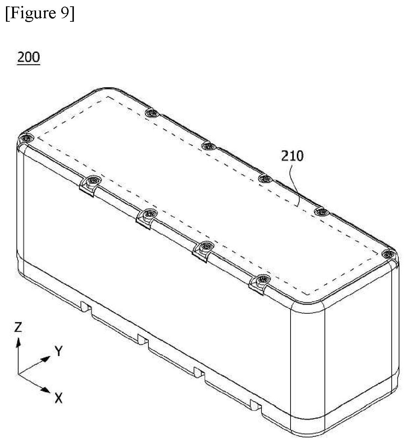

Figure 9 is a schematic diagram schematically showing an appearance of a battery pack (200) according to one example of the present invention.

Meanwhile, referring to Figure 9, the present invention provides a battery pack (200) comprising the above-described battery cell assembly. The battery pack (200) may comprise at least one battery cell assembly (100) and a battery management system (BMS) (210). Specifically, the battery management system (210) can perform overcharge/overdischarge prevention and temperature management of the battery cell (110). The battery management system (210) may be built into the battery pack (200). The battery management system (210) may be electrically connected to each battery cell.

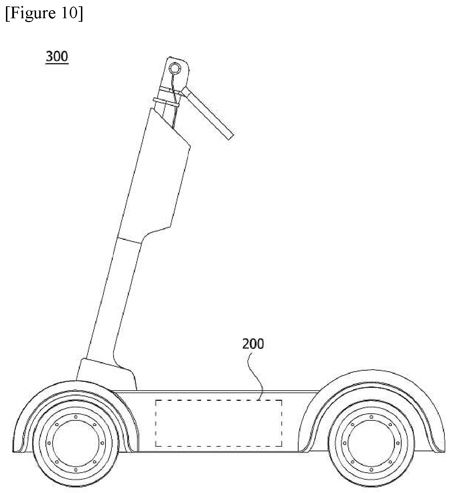

Figure 10 is a schematic diagram schematically showing an appearance of a transportation device (300) according to one example of the present invention.

Referring to Figure 10, in a transportation device (300) related to one example of the present invention, the transportation device (300) comprises a battery pack (200) of the present invention. That is, the transportation device (300) may have the battery pack (200) embedded therein. The transportation device (300) may use the battery pack (200) as a moving power. For example, the transportation device (300) may be an electric vehicle, an electric bicycle, an electric scooter, an electric wheelchair, an unmanned robot, an unmanned aircraft, and the like.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

## Claims

1. A battery cell assembly **characterized by** comprising:
a plurality of battery cells, each of which is provided with a positive terminal and a negative terminal; and
a plurality of holder assemblies arranged for the battery cells to be detachable, and each including a positive bus-bar arranged to be electrically connected to the positive terminal, a negative bus-bar arranged to be connected to the negative terminal, and a coupling mold arranged to be coupled to each of the positive bus-bar and the negative bus-bar, when connected to the battery cell, wherein
a mold vent hole arranged for gas to be discharged is formed in the coupling mold.

2. The battery cell assembly according to claim 1, **characterized in that**
the coupling mold comprises:
a mold plate portion on which the mold vent hole is formed; and
a mold protrusion portion protruding outwardly from the mold plate portion and having an exposure hole formed, wherein a portion of the positive bus-bar is exposed.

3. The battery cell assembly according to claim 2, **characterized in that**
the coupling mold has the positive bus-bar embedded therein so that a portion of the positive bus-bar is exposed to the outside.

4. The battery cell assembly according to claim 2, **characterized in that**
the positive bus-bar further comprises:
a positive plate portion located at a lower portion of the coupling mold; and
a positive protrusion portion exposed to the outside through the exposure hole of the coupling mold and extending from the positive plate portion.

5. The battery cell assembly according to claim 1, **characterized in that**
the battery cell comprises a cap assembly provided at the upper portion and arranged so that when a gas pressure of equal to or more than a predetermined pressure inside the battery cell occurs, at least a portion thereof is opened to discharge internal gas to the outside, wherein
the cap assembly is positioned to face the mold vent hole.

6. The battery cell assembly according to claim 2, **characterized in that**
in the negative bus-bar, an insertion hole arranged so that the coupling mold is inserted and coupled thereto is formed.

7. The battery cell assembly according to claim 6, **characterized in that**
the coupling mold has a slit, into which the inner circumference portion of the insertion hole is inserted, provided in the mold plate portion.

8. The battery cell assembly according to claim 6, **characterized in that**
the negative bus-bar has a plurality of fixing protrusions provided in the inner circumference portion of the insertion hole, and
on the mold plate portion of the coupling mold, a plurality of fixing holes arranged so that each of the plurality of fixing protrusions is inserted therein is formed.

9. The battery cell assembly according to claim 6, **characterized in that**
an upper cover, to which the plurality of holder assemblies is coupled, arranged to cover the plurality of battery cells is further included, and
a cover vent hole arranged to be in communication with the mold vent hole is formed on the upper cover.

10. The battery cell assembly according to claim 1, **characterized in that**
the positive bus-bar comprises
a positive connection unit elastically pressurizing the positive terminal.

11. The battery cell assembly according to claim 10, **characterized in that**
the positive connection unit comprises:
a pressurization moving part having electrical conductivity by contacting the positive terminal; and
an elastic member elastically supporting the pressurization moving part in the positive terminal direction.

12. The battery cell assembly according to claim 1, **characterized in that**
the negative bus-bar comprises:
a negative plate portion; and
a negative connection portion extending downward from the negative plate portion to be in contact with the negative terminal.

13. A battery pack comprising the battery cell assembly according to any one of claims 1 to 12.

14. A transportation device comprising the battery pack according to claim 13.
